# EUROPEAN PATENT APPLICATION

(11) **EP 0 938 065 A2**
(43) Date of publication of application: **25.08.1999**
(21) Application number: 99301376.2
(22) Date of filing: 23.02.1999
(51) Int. Cl.: G06T 11/00

(54) **Apparatus and method for composing image data interactively**

(30) Priority: 23.02.1998 JP 4075698
(71) Applicant: Atlus Co., Ltd., Tokyo (JP)
(72) Inventor: Takami, Tomio, Tokyo (JP)
(74) Representative: Phillips, Patricia Marie

(57) **Abstract**

An apparatus for composing image data interactively, which is capable of composing a plurality of digital image data is provided. The apparatus includes an image data reading unit for reading an image data of a subject from a storage medium into which the image data is stored, the image data being picked up in advance by using any kind of an external image pickup unit. The apparatus further includes an image pickup unit for picking up an image of a subject that is placed at a predetermined location with respect to the interactive-type apparatus and for producing an image data of the subject, and a determining unit for determining whether or not an image data of a subject to be composed is the image data that is read by the image data reading unit. The apparatus further includes an operation mode selecting unit for selecting either a first operation mode that uses the image data read by the image data reading unit or a second operation mode that uses the image data produced by the image pickup unit, based on a determined result of the determining unit, and an image composing unit for composing the image data of the subject with an image data of other than the subject, based on an operation mode selected by the operation mode selecting unit and for creating an composed image data, and a composed image creating unit for creating at least one composed image based on the composed image data created by the image composing unit.

## Description

### BACKGROUND OF THE INVENTION

### 1. Field of the Invention

The present invention relates to a composition of image data taken by a camera, and more particularly to an apparatus and method for composing image data taken by a digital camera interactively.

### 2. Description of the Related Art

An example of a conventional image editing apparatus which is capable of editing an image, such as a trimming, an enlargement, or a contraction and the like, for a film image that is made by reading an original image from a photo-film will be described.

The conventional image editing apparatus comprises an input image display control unit for displaying an inputted image on a screen of a display device, a trimming area setting unit for setting or changing a trimming area for an image, a frame display control unit for displaying a trimming frame that indicates the trimming area in superimposing with an image on the screen, a confirmation input unit for outputting a signal that is to confirm the trimming image, a confirmation screen display control unit for displaying the trimming image as a confirmation image on the screen in accordance with the signal, and the apparatus is adapted to display the image and the trimming frame on the screen in accordance with the signal from a change input unit after having displayed the confirmation screen and to change the trimming area by the trimming area setting unit.

In the conventional image editing apparatus as described above, in a state that the input image is being displayed on the screen of the display device, when setting a trimming area by a trimming area setting unit, a screen for a trimming edition in which the input screen and a trimming frame that is a trimming area display are superimposed is displayed on the screen of the display. When the signal for confirming the trimming image is outputted from the confirmation input unit, the trimming image is displayed on the screen of the display device as the confirmation screen by the confirmation screen display control unit, instead of the screen for the trimming edition. When changing the trimming area with a reason such as it is not a desirable trimming image and the like as a result that an operator has seen the confirmation screen, as outputting a signal by operating the change input unit, the screen for the trimming edition is displayed on the screen, thereby an enlargement, a contraction, a shift, and a deletion of the trimming frame can be implemented by the trimming area setting unit.

As the input image, an image signal being read from a film or other manuscripts, and/or an image signal being transferred from a host computer and the like can be used. As the confirmation input means and the conversion input means, a variety of instruments such as a key switch, a mouse, an operation button being displayed on a screen, or a combination thereof, and the like can be used.

However, in the conventional image editing apparatus described above, there is a problem that an operation thereof is rather complex and thus a composition of the image data can not be readily made.

There is another example of a conventional image editing apparatus , which is manufactured by the ATLUS, the assignee of the present invention, and which is capable of accepting a digital image taken by the digital camera "DIGIO" manufactured by the Sega to print the digital image on a seal, and also capable of composing a picture taken by the apparatus with a frame and letter(s) that can be selected among a plurality of frames and letters preinstalled in the apparatus. However, this apparatus is enabling to combine only the selected frame with the picture taken by the apparatus, but not with the digital image taken by the digital camera.

### SUMMARY OF THE INVENTION

It is an object of the present invention to provide an apparatus for composing image data interactively, which is a user-friendly and capable of selecting one of at least two different digital image inputs.

The apparatus for composing a plurality of image data interactively according to the present invention includes: an image data reading unit for reading an image data of a subject from a storage medium into which the image data is stored, the image data being picked up in advance by using any kind of an external image pickup means; an image pickup unit for picking up an image of a subject that is placed at a predetermined location with respect to the apparatus and for producing an image data of the subject; a determining unit for determining whether or not an image data of a subject to be composed is the image data that is read by the image data reading unit; an operation mode selecting unit for selecting either a first operation mode that uses the image data read by said image data reading unit or a second operation mode that uses the image data produced by the image pickup unit, based on a determined result of the determining unit; an image composing unit for composing the image data of the subject with an image data of other than the subject, based on an operation mode selected by the operation mode selecting unit and for creating an composed image data; and a composed image creating unit for creating at least one composed image based on the composed image data created by the image composing unit.

As a result of the above described configuration, one of the digital image data picked up by at least two different image pickup units can be selected, and the selected digital image data can be composed with other image(s) with a simple operation in accordance with the apparatus of the present invention

The apparatus of the present invention further includes a printing unit for printing on a predetermined seal the composed image created by the composed image creating unit and for outputting the seal printed with the composed image.

In apparatus of the present invention, the image composing unit further includes a composed image selection unit which is capable of selecting to create the image data of the subject picked up by the image pickup unit with a single-composed image, a double-composed image, or a croma-key processed image, when the operation mode selected by the operation mode selecting unit is the second operation mode.

In the apparatus according to the present invention, the image data composing unit is capable of zooming-in/zooming-out the image data picked up in either said first operation mode or said second operation mode before composing the image data of the subject with the image data of other than the subject.

In the apparatus according to the present invention, the image data of other than the subject includes at least a frame data and a message imaged data.

In the apparatus according to the present invention, the image data of other than the subject further includes an outer frame image data.

In the apparatus according to the present invention, the external image pickup unit is a digital camera, and the storage medium is an IC card, and the image data reading unit is a digital image data reader that reads an image data from the IC card into which the image data picked up by the digital camera is stored.

In the apparatus according to the present invention, the image pickup unit is a CCD camera that is built-in the interactive-type apparatus and is capable of taking a picture of the subject by zooming-in/zooming-out.

It is another object of the present invention to provide method for composing image data interactively, which is a user-friendly and enable to select one of at least two different digital image inputs.

The method of composing a plurality of image data interactively, comprising the steps of: determining whether or not an image data of a subject to be composed is an image data that is picked up in advance; composing the image data of the subject with an image data of other than the subject, if the image data of the subject to be composed is picked up in advance according to the determined result; taking a picture of a subject that is placed at a predetermined location and creating an image data of the subject, and composing the image data of the subject with an image data of other than the subject, if the image data of the subject to be composed is not picked up in advance according to the determined result; and creating at least one composed image based on the composed image data.

As a result of the above described steps, one of the digital image data picked up by at least two different image pickup units can be selected, and the selected digital image data can be composed with other image(s) with a simple operation in accordance with the method of the present invention

The method according to the present invention further comprises the step of printing the composed image on a predetermined seal and outputting the seal printed with the composed image.

The method according to the present invention further comprises the step of selecting to create the image data of the subject picked up with a single-composed image, a double-composed image, or a croma-key processed image, when the image data of the subject to be composed is not picked up in advance.

The method according to the present invention further comprises the step of zooming-in/zooming-out the image data before composing the image data of the subject with the image data of other than the subject.

In the method according to the present invention, the image data of other than the subject includes at least a frame data and a message imaged data.

In the method according to the present invention, the image data of other than the subject further includes an outer frame image data.

### BRIEF DESCRIPTION OF THE DRAWINGS

Fig. 1 is a block diagram schematically showing the configuration of the hardware according to one embodiment of the apparatus for composing image data interactively of the present invention;
Fig. 2 is a diagram schematically illustrating the configuration of the software of the apparatus for composing image data in Fig. 1;
Fig. 3 is a diagram illustrating the operations of the system monitor and the tool monitor in the apparatus for composing image data in Fig. 1;
Fig. 4 is a diagram illustrating the operation of the program loader in the apparatus for composing image data in Fig. 1;
Fig. 5 is a diagram illustrating the activation/termination in the apparatus for composing image data in Fig. 1;
Fig. 6 is a diagram illustrating an correspondence at a time when the power supply is OFF in the apparatus for composing image data in Fig. 1;
Fig. 7 is a diagram illustrating a general operation of the apparatus for composing image data in Fig. 1;
Fig. 8 is a diagram illustrating the I/O control function of the apparatus for composing image data in Fig. 1;
Fig. 9 is a flow chart illustrating the processes of the apparatus for composing image data in Fig. 1;
Fig. 10 is a diagram illustrating the advertisement function of the apparatus for composing image data in Fig. 1;
Fig. 11 is a diagram illustrating the demonstration function of the apparatus for composing image data in Fig. 1;
Fig. 12 is a diagram illustrating the operation of the Pricla mode shown in Fig. 9;
Fig. 13 is a diagram illustrating each of the single, double and croma-key modes;
Fig. 14 is a diagram illustrating the vertical-type selection and the horizontal-type selection in the type-selection of Fig. 9;
Fig. 15 is a diagram illustrating the frame selection function of the apparatus for composing image data in Fig. 1;
Fig. 16 is a diagram illustrating the camera-picture control function in the apparatus for composing image data in Fig. 1;
Fig. 17 is another diagram illustrating the camera-picture control function in the apparatus for composing image data in Fig. 1;
Fig. 18 is a diagram illustrating the seal print function in the apparatus for composing image data in Fig. 1;
Fig. 19 is a diagram illustrating the operation of the Digital Camera mode of Fig. 9;
Fig. 20 is a diagram illustrating the Thumb-Nail Selection screen in the apparatus for composing image data in Fig. 1;
Fig. 21 is another diagram illustrating the Thumb-Nail Selection screen in the apparatus for composing image data in Fig. 1;
Fig. 22 is yet another diagram illustrating the Thumb-Nail Selection screen in the apparatus for composing image data in Fig. 1;
Fig. 23 is a diagram illustrating the trimming-zoom process in the apparatus for composing image data in Fig. 1;
Fig. 24 is another diagram illustrating the trimming-zoom process in the apparatus for composing image data in Fig. 1;
Fig. 25 is a diagram illustrating the final confirmation in the apparatus for composing image data in Fig. 1;
Fig. 26 is a diagram showing a profile of one embodiment of the apparatus for composing image data according to the present invention; and
Fig. 27 is a side view showing a profile of one embodiment of the apparatus for composing image data according to the present invention.

### DESCRIPTION OF THE PREFERRED EMBODIMENTS

In the following, the preferred embodiments of the apparatus and method for composing image data interactively according to the present invention will be described in detail respectively, with reference to the accompanying drawings.

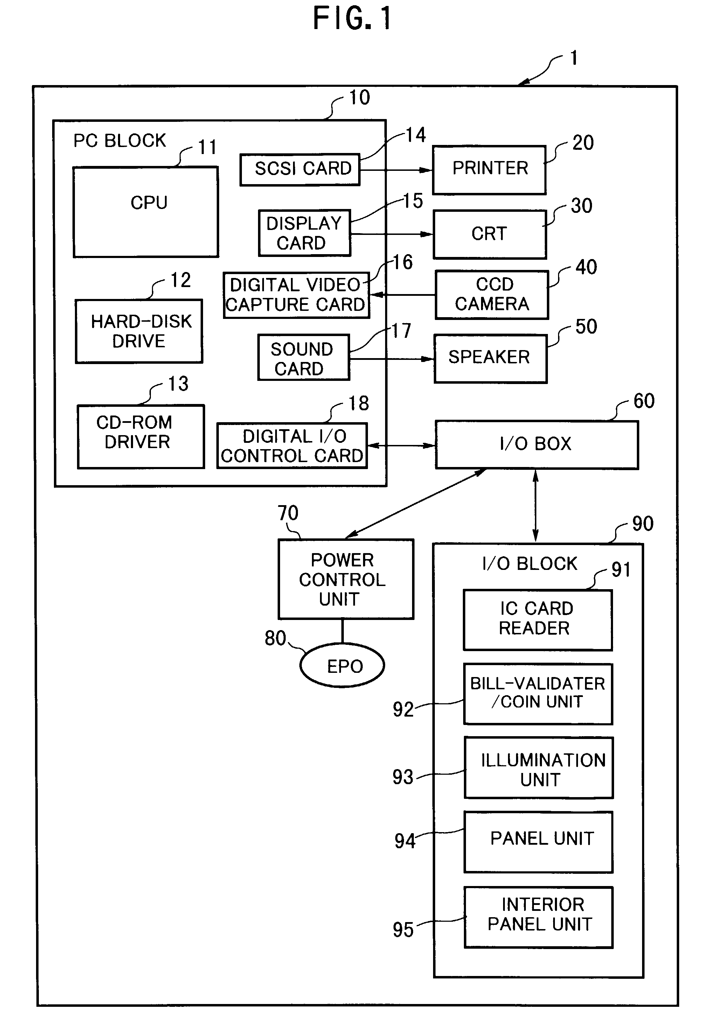

Fig. 1 is a block diagram schematically showing the configuration of the hardware of one embodiment of the apparatus for composing image data interactively according to the present invention.

The apparatus for composing image data interactively according to the present invention shown in Fig. 1 (hereinafter, it may be referred to as the system of the present invention) includes a PC block unit 10, a printer 20 connected to the PC block unit 10, a CRT (cathode ray tube) 30 connected to the PC block unit 10, a CCD camera 40 connected to the PC block unit 10, a speaker 50 connected to the PC block unit 10, an I/O (input/output) box 60 connected to the PC block unit 10, a power supply control unit 70 connected to the I/O box 60, an EPO (emergency power off) device 80 connected to the power supply control unit 70, an I/O block unit 90 connected to the I/O box 60.

The PC block unit 10 includes a central processing unit 11, a hard-disk drive 12, a CD-ROM drive 13, a SCSI (small computer system interface) card 14, a display card 15, a digital video capture card 16, a sound card 17, and a digital I/O control card 18.

The I/O block unit 90 includes an IC card reader 91, a bill-validater /coin unit 92, an illumination unit 93, a panel unit 94, and an interior panel unit 95.

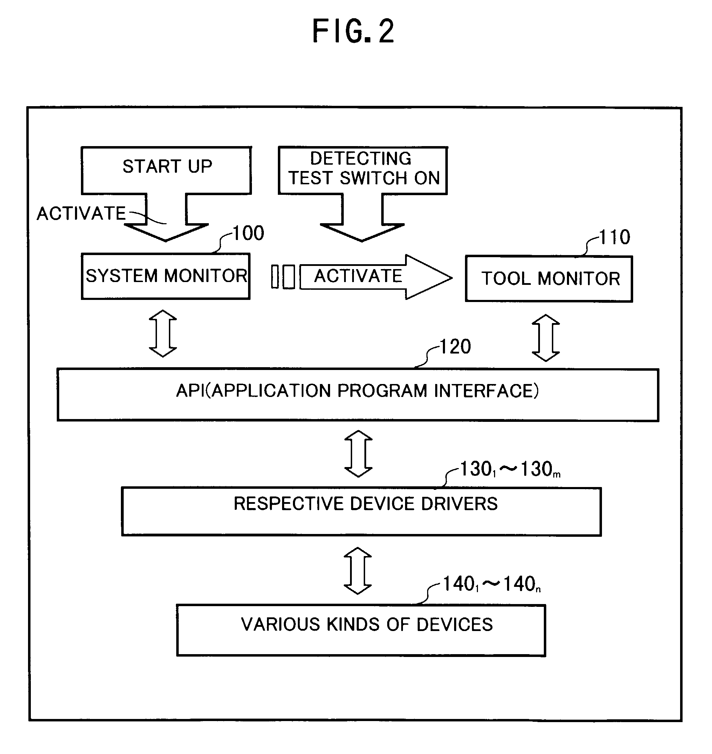

Fig. 2 is a diagram schematically illustrating a software configuration in the system of the present invention.

As shown in Fig. 2, the software of the present system includes a system monitor program (hereinafter, it is referred to as a system monitor) 100 and a tool monitor program (hereinafter, it is referred to as a tool monitor) 110. The system monitor 100 is activated by a start-up, and the tool monitor 110 is activated by an activation of the system monitor 100 or by a detection of the test switch ON. Both of the system monitor 100 and the tool monitor 110 are configured to act each other with an application program interface (hereinafter, it is referred to as an API) 120, respectively. Further, the API 120 acts with each of the device drivers 130₁ to 130ₘ, respectively, and also each of the device drivers 130₁ to 130ₘ acts each other with the various kinds of devices 140₁ to 140ₙ, respectively.

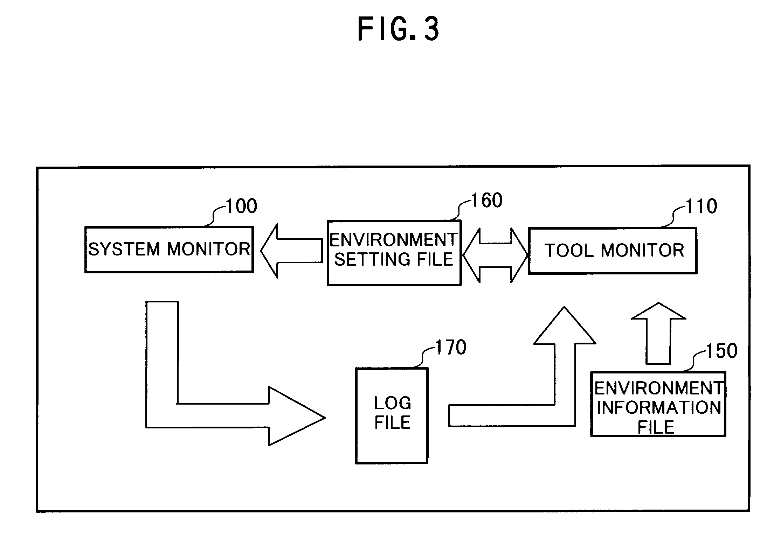

As shown in Fig. 3, the system monitor 100 and the tool monitor 110 operate according to the contents of an environment information file 150, the contents of an environment setting file 160, and the contents of a log file 170, respectively (Further, the details of the environment information file 150, the environment setting file 160 will be described below).

In the environment information file 150, there are described the contents of the selection items (the operation modes, the device information, etc.) that are presented on the screen of the tool monitor 110. In the environment setting file 160, the result of the selected items on the tool monitor 110 is outputted, and in the system monitor 100, an operation mode thereof is determined by referring to the contents of the environment setting file 160. Further, the log file collects the log information for the operation, such as the number of coins inserted, the number of seals printed, and a utilization frequency of the frames, and the like.

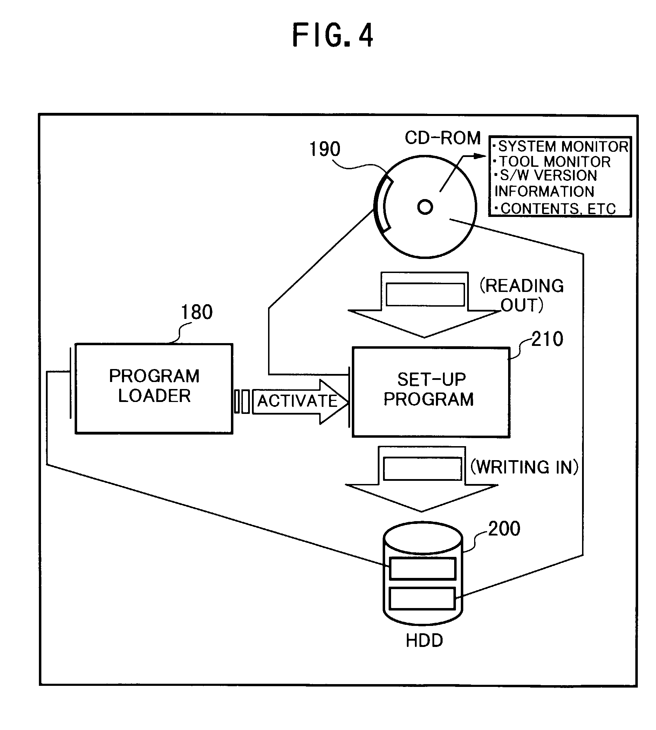

Fig. 4 is a diagram illustrating an operation of a program loader in the system of the present invention.

The program loader 180 activates a set-up program (PriclaSetup.exe) 210 for downloading the programs of the system monitor 100, the tool monitor 110 and the like that are distributed to the CD-ROM, onto a hard-disk 200, and is normally installed in the hard-disk 200.

The program loader 180 activates a set up program 210 at a time of staring the system, i.e., when there is no system monitor 100 and tool monitor 110 on the hard-disk 200 (a first time only).

Within the set up program 210, the various kinds of processes such as deleting the unwanted data, copying from the CD-ROM 190 to the hard-disk 200, and handling over the variety of information and the like are implemented.

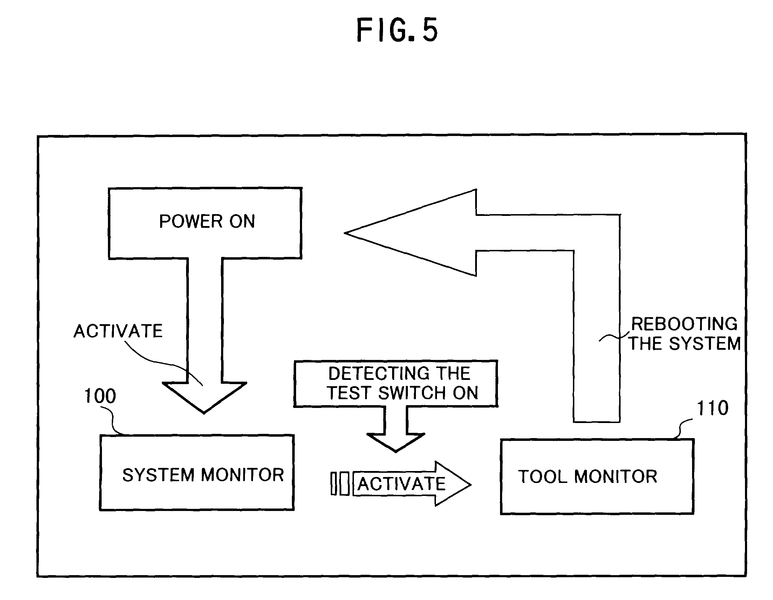

Fig. 5 is a diagram illustrating the activation/termination in the system of the present invention.

The apparatus for composing image data interactively according to the present invention is configured to activate the system monitor 100 automatically after energizing the apparatus. That is, it is automatically registered to the start-up (see also Fig. 2). While activating the system monitor 100, by operating a test switch (not shown) within the frame (not shown), the system monitor 100 is completed and the tool monitor 110 is then activated (see also Fig. 2). Thereafter, the system monitor 100 is activated by rebooting the system at a time when the tool monitor 110 is completed.

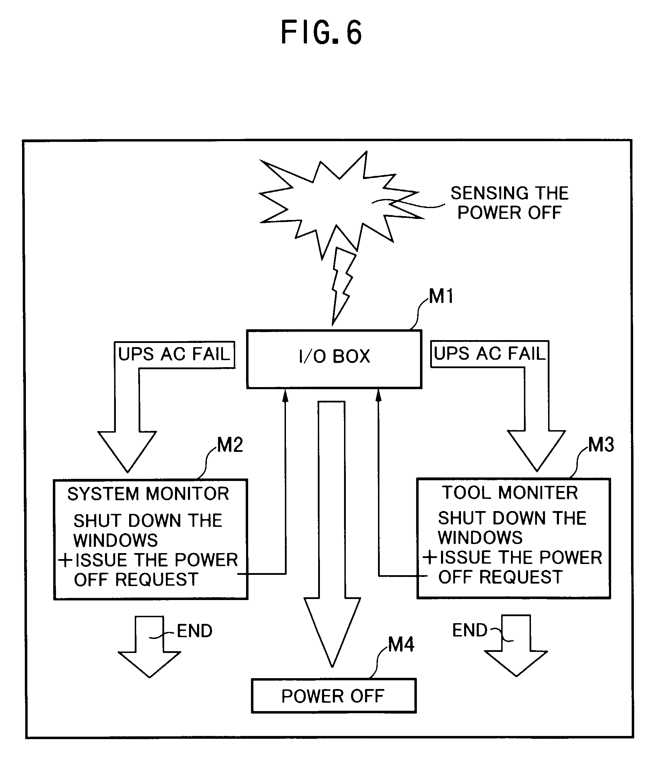

Fig. 6 is a diagram illustrating a correspondence at a time of the power OFF in the present system.

When the power OFF is occurred in the present system, the system should be completed usually with the procedures described below. That is, it includes the step of sensing a power-cut in the I/O board (step M1), i.e., the step of turning to "UPS AC FAIL ON". In the system monitor 100 and the tool monitor 110, the step of issuing the Windows shut down command, as well as the step of issuing the power OFF request to the I/O board at a time of receiving the " UPS AC FAIL ON" (steps M2, M3) are included. Further, the step of completing a self-process (step M4) is also included.

In the following, the operation of apparatus for composing image data interactively according to the present invention shown in Fig. 1, more particularly, the operation of the system monitor 100 will be described in detail with reference to the further drawings.

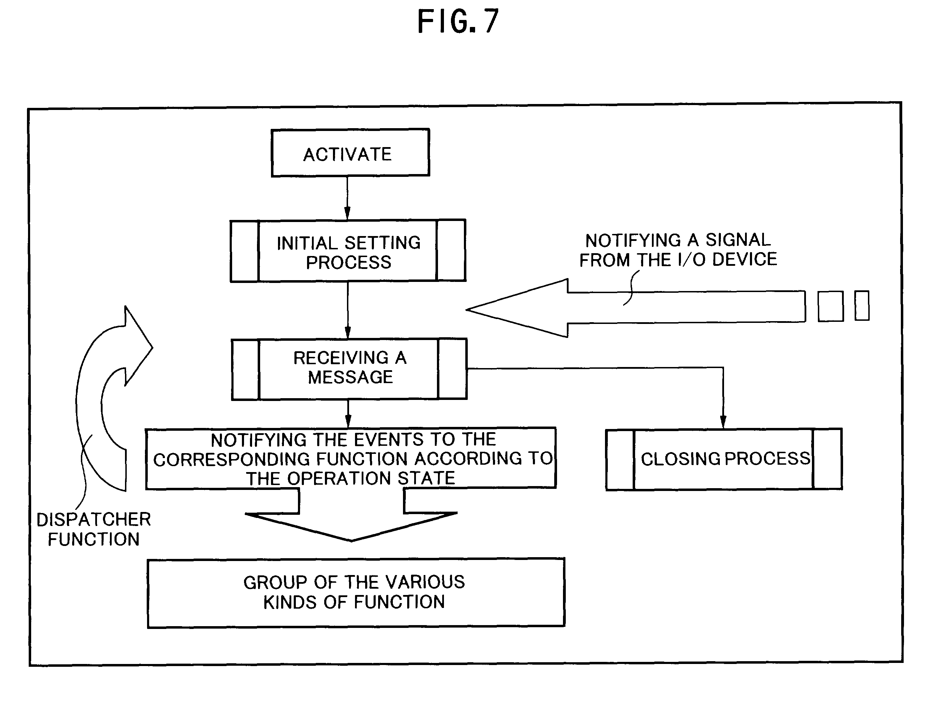

Fig. 7 is a diagram illustrating a general operation of the interactive-type apparatus for composing image data according to the present invention.

The operation function of the system of the present invention is to implement the control of process sequence described in below, according to the contents that are inputted from the I/O device such as a joy-stick, a button, and a coin mechanism and the like.

As shown in Fig. 7, the processes in the system of the present invention are classified into the following three functions:
1) Initial Setting Process
   that includes the steps of implementing a basic initialization process, and determining an operation mode by referring to the environment setting file;
2) Dispatcher Function
   that includes the steps of receiving a message, and notifying the events to the applicable functions on the basis of the contents thereof; and
3) Completion Process
   that includes the step of implementing a process completion process at a time of receiving the completion notification.

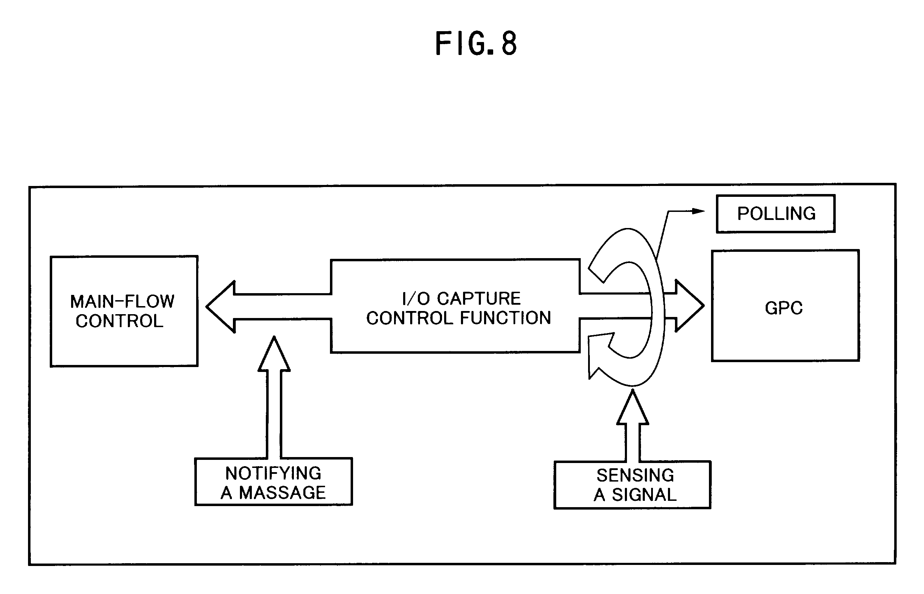

Now, the I/O control function in the system of the present invention will be described with reference to Fig. 8. The I/O control function in the system of the present invention acts as an interface with the I/O (hereinafter, it is referred to as GPC(Game Peripheral Controller)) and thus regularly monitors a signal from the GPC (polling system). When sensing an occurrence of a signal, it will notify to a main flow control unit by transmitting a message to the main flow control unit.

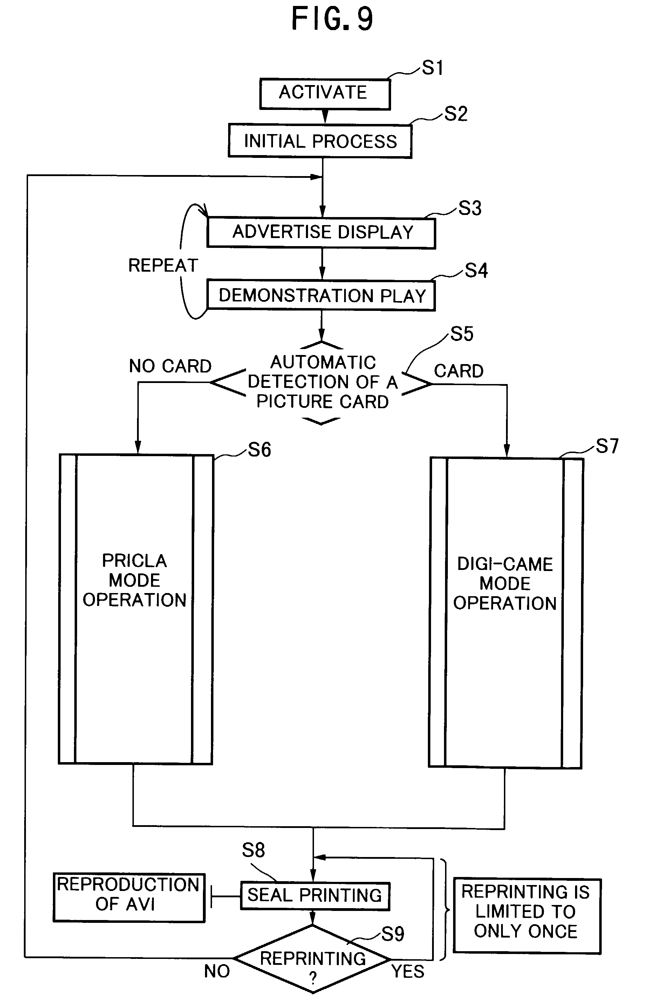

Fig. 9 is a flow diagram illustrating the processes described above. Herein, the operation of the system of the present invention in Fig. 1 will be described with reference to Fig. 9.

The operation includes the step of activating the system by turning ON the power supply in the apparatus for composing image data interactively in Fig. 1 (step S1), and the step of performing the initial setting process as described above (step S2).

Further, it includes the step of implementing an advertise display as the Atlus logo being appeared on the screen of the CRT 30 (step S3).

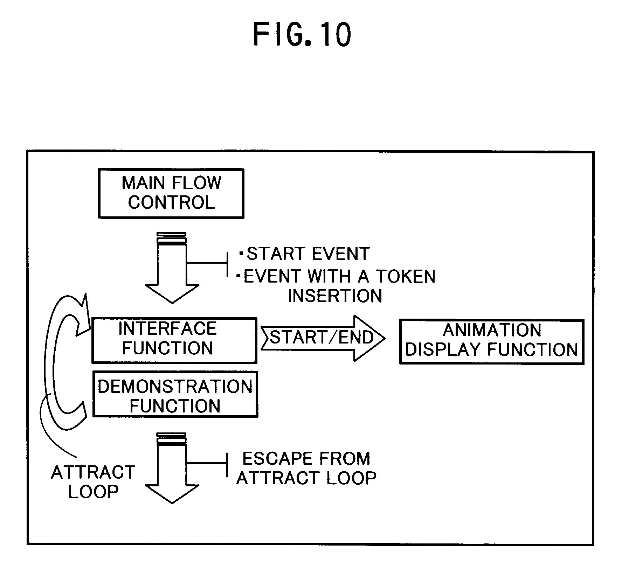

Now, the advertise function in the system of the present invention will be described with reference to Fig. 10. This function performs a display of an opening screen (a reproduction of the AVI) until an OK button is depressed at a time of establishing a credit or of the FREE PLAY. For the opening screen, it will be presented repeatedly (attract loop) along with a demonstration function which will be described in the followings. There are two internal functions for the advertise function, as follows:
1) Interface Function with Main Flow Control;
   that includes the steps of receiving an event from the main flow control, and controlling the start/end of the animation.
2) Animation Display Function
   that includes the step of displaying a defined animation, along with the control of the start/end from the interface function described above.

Again, referring to Fig. 9, the advertise demonstration is displayed on the screen of the CRT 30 (step S4).

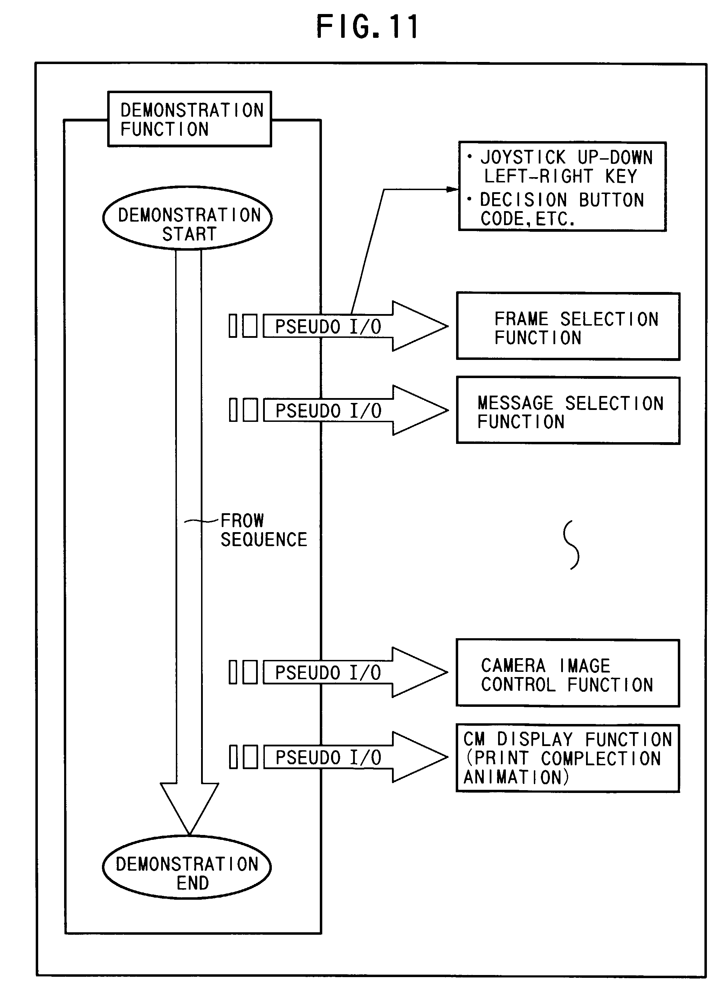

Now, referring to Fig. 11, the above-mentioned demonstration function will be described. This demonstration function is a function that is provided as a part of the attract loop, and presents an explanation of an operational system on the demonstration screen. As the system, the I/O code (such as the joystick, button, and the like) is implemented in a form that notifies the simulated event, from the demonstration function to each of these functions. A display sequence for use in the demonstration is the same as a commonly used game operation sequence.

Again, referring to Fig. 9, the explanation will be continued. The above-mentioned steps S3 and S4 are repeated as required. Further it includes the steps of detecting automatically whether or not there is already a picture card (step S5), and if there is no picture card, performing the Pricla mode operation (described in detail below) (step S6), and if there is a picture card, performing a digital camera mode (hereinafter, it is referred to as the digi-came mode) operation (described in detail below) (step S7). It further includes, whenever either one of the above steps was performed, the steps of printing a seal as a result of reproducing the AVI (step S8), determining whether or not the seal is to be re-printed if the seal has been printed once (step S9), and if it is to reprint, then printing the seal in returning to the step S8 described above. However, the reprint is limited to just once. On the other hand, it is not to reprint in the step S9, then returning to the step S3, and implementing the advertise display, and then the above-mentioned operation procedures will be repeated as required.

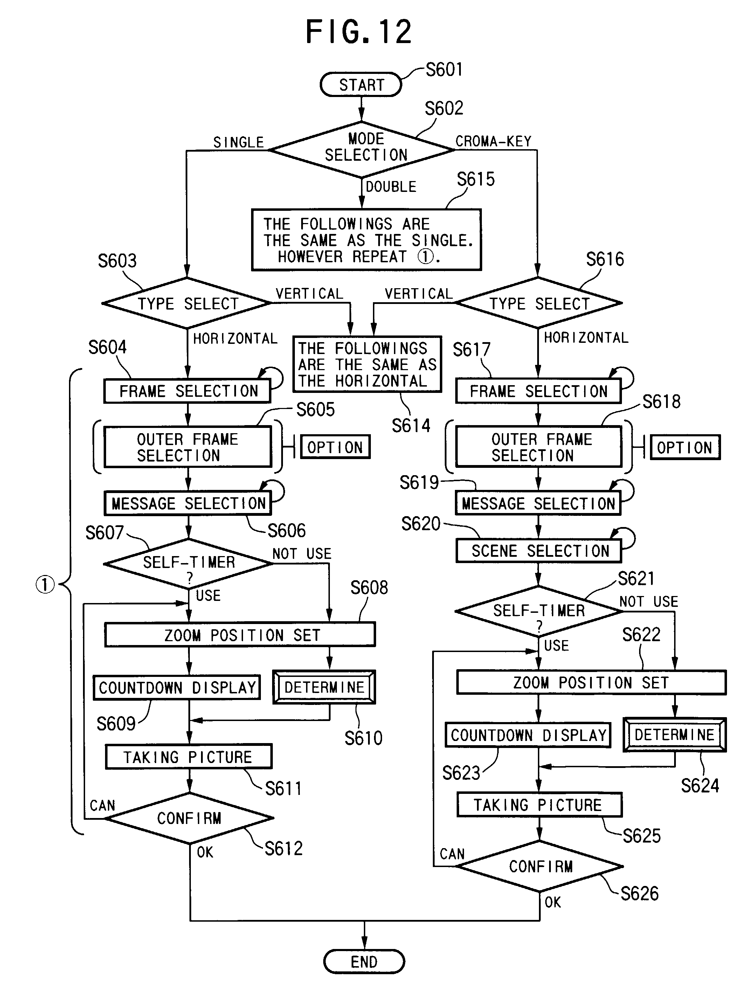

Herein, with reference to Fig. 12, the operation of Pricla mode shown in the step S6 in Fig. 9 will be described.

It includes the following steps; if the operation of Pricla mode is selected at the step S6 in Fig. 9 (step S601), then a mode select for performing a mode selection of the single, double, or croma-key (step S602) is displayed on the screen of the CRT 30.

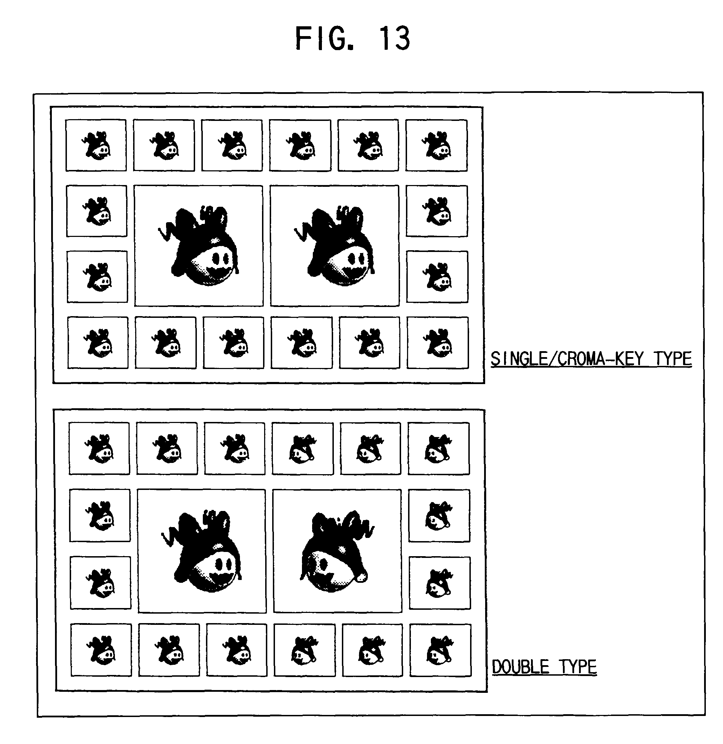

As explained by showing examples thereof in Fig. 13, the single mode is meant that only one image pickup pattern (one kind of image) is printed out. That is, the contents of the seals to be printed are the same type for all of 18 separate parts, and an act of taking a picture is just once. The double mode is meant that two different image pickup patterns, i.e., two kinds of images are printed out simultaneously. That is, it is the type that the contents of the seals to be printed are different for 9 separate parts in the sections on the right-hand side and on the left-hand side, respectively. Accordingly, the act of taking a picture is performed twice. The croma-key mode is meant an image pattern that is the same type as the single type, but a portion of the first image is cut out and then other (the second) image is fitted (captured) into the cut-out portion of the first image (i.e., the croma-key process is implemented).

The operations until finalizing the mode selection include the steps of (a) shifting a cursor frame for use in selection by the left-and-right operations of the joystick, and (b) depressing a decision button, thereby finalizing the mode selection.

However, since the time limit (the timer) is provided for the mode selection, it is configured that when it becomes a time-over, then at that moment, the mode selection at which the high-light frame for use in selection is located is selected automatically.

Referring to Fig. 12 again, the description of the apparatus according to the present invention will continue.

Here, a case of which the single mode is selected at the step S602 will be described.

If the single mode is selected at the step S602, then a type selection screen with which a print is selected either in a vertical or a horizontal type is displayed on the screen of the CRT 30 (step S603).

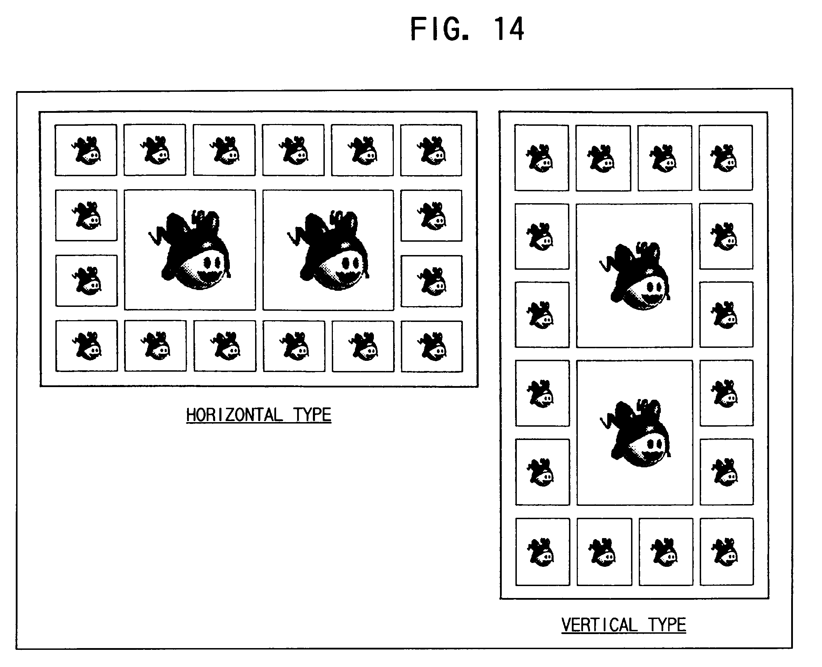

Herein, referring to Fig. 14, a type select is explained. A vertical type selection is a type in which the contents of seal are printed in an upright image, and a horizontal type selection is a type in which the contents of seal are printed in an oblong image, respectively.

The operations until finalizing the time selection include the steps of (a) shifting a cursor frame for use in selection by the left-and-right operations of the joystick, and (b) depressing a decision button, thereby finalizing the time selection.

However, since the time limit (the timer) is provided for the time selection, it is configured that when it becomes a time-over, then at that moment, the time selection at which the high-light frame for use in selection is located is selected automatically.

Referring to Fig. 12 again, the description of the apparatus according to the present invention will continue.

Herein, a case of which the horizontal type (oblong type) is selected at the step S603 will be described.

Since a plurality of frames are displayed on the screen of the CRT 30, the user selects a favorite frame among the plurality of frames (step S604). However, when the user is not pleased with the selected frame or is changed her/his mind to other frame, it is possible to cancel the selected frame and then to repeat the same operations as returning to the step S604 again.

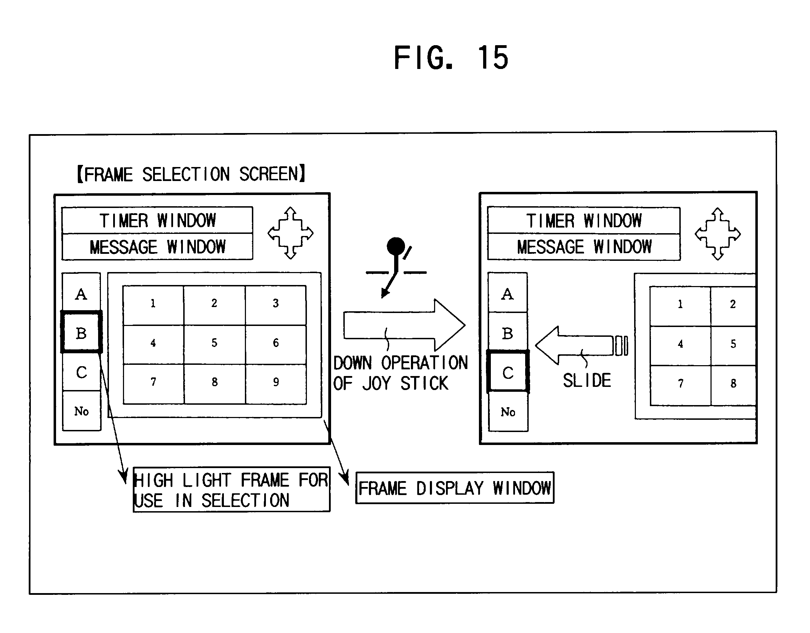

Now, with reference to Fig. 15, the frame selection function of the system of the present invention will be described in detail.

The frame selection function provides a user interface at a time of making a selection of a frame to be printed on a seal. The operations until finalizing the frame selection are as follows:

(1) Making a selection among the group ("A", "B", C", or "NO FRAME");
1a) A cursor frame for use in selection is shifted by the up-and-down operations of the joystick. Matching with this movement, the group-ready frame display window is slide-wise displayed. When the cursor frame is located on "NO FRAME", the frame display window is slide-wise deleted.
1b) A group is selected by depressing a decision button, thereby the cursor frame for use in selection is shifted to the frame display window.

(2) Performing a selection of a frame;
2a) A cursor frame for use in selection is shifted by the up-down and left-right operations of the joystick.
2b) A frame is selected by depressing a decision button, thereby the confirmation screen is displayed. By depressing a cancel button at this moment, it returns to the group selection (1) again.

(3) Finalizing the frame selection;

The selected frame is displayed on the screen. Herein, the frame is finalized by depressing the decision button. At this moment, when depressing the cancel button, it returns to the frame selection (2) again.

However, since the time limit (the timer) is provided for the frame selection, it is configured that when it becomes a time-over, then at that moment, the frame at which the high-light frame for use in selection is located is selected automatically.

Referring to Fig. 12 again, the description of the apparatus according to the present invention will continue.

An outer frame selection screen is displayed on the screen of CRT 30 as an option (step S605). If this option of the outer frame selection is selected, a multiple of outer frames are displayed, so that a user can select his/her favorite outer frame among them. On the other hand, if the option is not selected, it would proceed to the next step without specifying the outer frame.

When having completed each of the steps described above, the message select screen is displayed on the screen of CRT 30 (step S606). Herein, a multiple of messages are displayed on the screen of CRT 30, and a user will select his/her favorite message among them. Then, on the screen of the CRT 30, a confirmation screen of a message display location will be displayed. Herein, the user can change a display location of the selected message by operating a joystick.

Now, the above-mentioned message function will be described in detail. This message function provides a user interface at a time when implementing a selection of a message to be printed on a seal. The operations until finalizing the message selection include:

(4) Implementing a message selection;
4a) A cursor frame for use in selection is shifted by the up-down and left-right operations of the joystick. At this moment, when there are 6 or more kinds of the messages, the message display window is slide-wise displayed as similar to the frame selection function.
4b) A message is selected by depressing a decision button, thereby the message confirmation screen is displayed.

(5) Finalizing the message selection;
(5a) The selected message is displayed on the screen. Herein, a display location of the message can be shifted by the up-down and left-right operations of the joystick.
(5b) The message selection and the display location are finalized by depressing the decision button. At this moment, when depressing the cancel button, it returns to the message selection (4) again.

However, since the time limit (the timer) is provided for the message selection, it is configured that when it becomes a time-over, then at that moment, the message at which the high-light frame for use in selection is located is selected automatically.

Referring to Fig. 12 again, the description of the apparatus according to the present invention will continue.

As describe above, if the message selection is completed at the step S606, then it is determined whether or not the self-timer is to be used (set) (step S607).

Now, the self-timer setting function in the system of the present invention will be described. This self-timer setting function provides a user interface at a time of making a selection of operating a shutter either with a "self-timer" (automatically) or with a "hand" (manually) at a time of taking a picture. The operations until finalizing the self-timer setting include:

(6) Self-Timer Setting
6a) A cursor frame for use in selection is shifted by the left-and-right operations of the joystick.
6b) A self-timer setting is finalized by depressing a decision button.
   YES; use the self-timer.
   NO; does not use the self-timer

However, since the time limit (the timer) is provided for the self-timer selection, it is configured that when it becomes a time-over, then at that moment, the one at which the high-light frame for use in selection is located is selected automatically.

Referring to Fig. 12 again, the description of the apparatus according to the present invention will continue.

After having selected either one at the step S607, then a zoom location setting of a camera is performed (step S608), and if the use of self-timer is selected at the step S607 (the zoom location of camera can be freely adjusted while the timer is working), a count-down display of the timer is implemented, thereby making a count-down (step S609), and automatically taking a picture at the same time as a time-out (step S 611). On the other hand, when it is selected to not use the self-timer at the step S607, and if the zoom location is set at the step S608, then without the count-down, the decision is made (step S610), and thereafter, a picture is taken with a camera (step S611). Then, confirming a result of taking a picture as a desired layout is being formed or not (step S612), and by returning to the step S608, the above described steps of the post-zoom location setting are repeated, if necessary. Then, as a result of the confirmation, if the layout is satisfied one, then getting out from this loop (step S613).

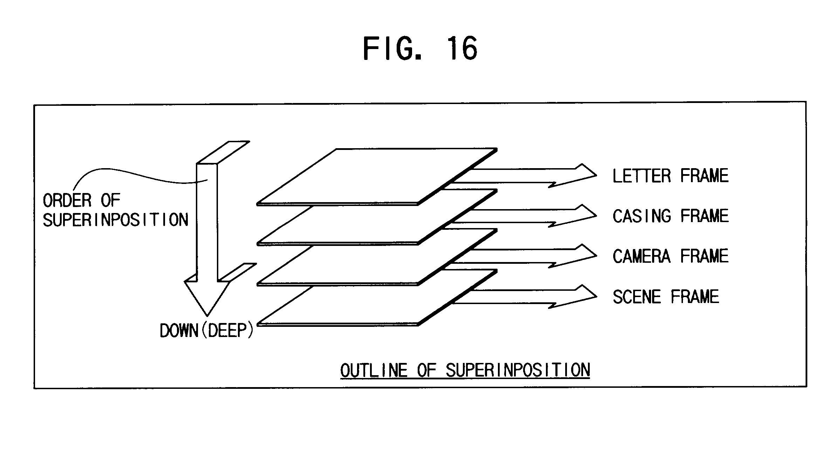

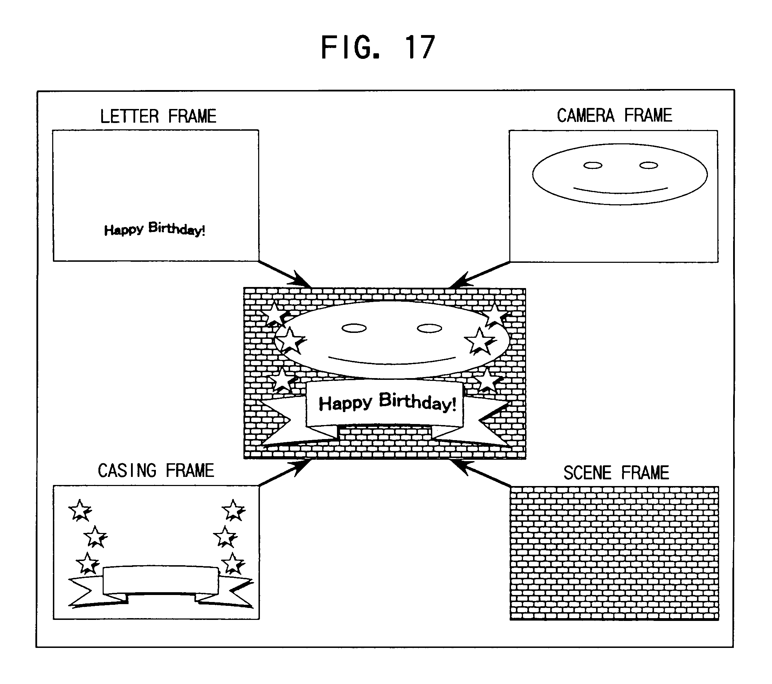

Now, with reference to Figs. 16 and 17, the camera image control function will be described.

This camera image control function is to display, on the display (CRT) 30 show in Fig. 1, the pictures taken by the camera, by superimposing them with each of the frames, as shown in Figs. 16 and 17. While displaying the motion pictures, it makes possible to zoom-in and/or zoom-out by operating the joystick. Further, it is so configured that the zoom location is returned to a predetermined location automatically after a completion of taking a picture.

Referring to Fig. 12 again, the description of the apparatus according to the present invention will continue.

Other than the horizontal type of the single mode described above, it is possible to select the vertical type in the type selection at the step S603.

In case that the vertical type is selected in the type selection at the step S603 (step S614), the explanation thereof will be omitted since the operations thereof are the same as the ones when the horizontal type is selected as described above.

Further, when the double mode is selected at the step S602 (step S615), the explanation thereof will be omitted since the operations similar to the ones for the single mode are performed, but as shown in Fig. 12, since it is the double mode, it is required to repeat the steps S604 to S612 once more when the operations of the single mode are completed.

Moreover, in case of selecting the croma-key mode at the step S602, it includes the steps of, after having performed the operations similar to the steps S603 to S606 for the steps S616 to S619, repeating, as necessary, the scene (background) selection (step S620) for selecting a scene into which the pictures are fitted until the favorite scene is determined, and performing the operations similar to the steps S607 to S612 for the steps S621 to S626, then getting out from this loop (step S613).

When getting out from this loop, then returning to Fig. 9, and performing a seal printing (step S8).

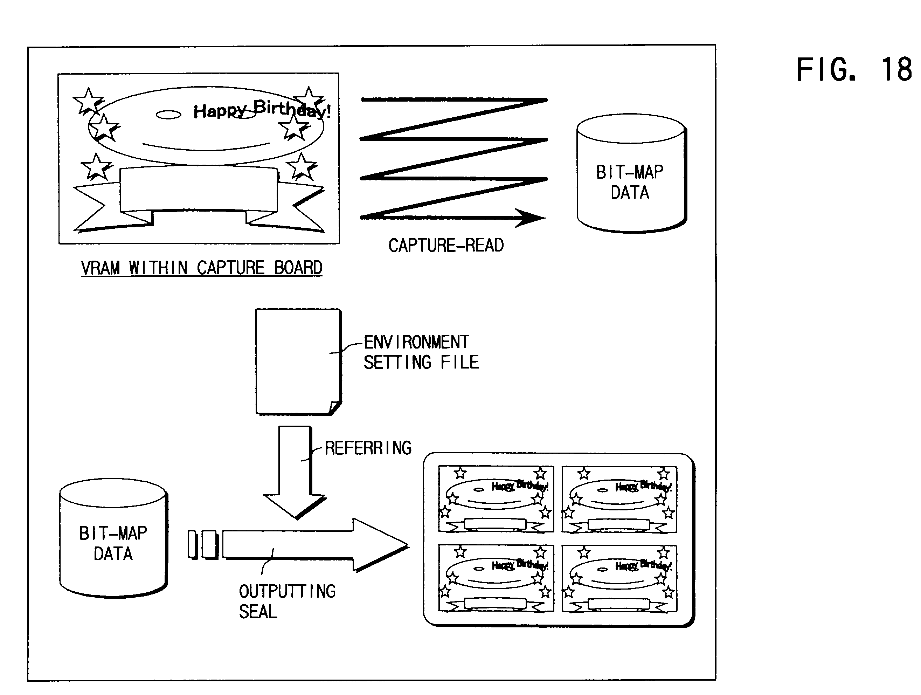

Referring to Fig. 18, the seal printing function in the system of the present invention will be described.

This seal printing function is to print the image data superimposed and displayed on the display as a seal. The printing is implemented with the procedures that include the steps of:

(7) Reading the data on the capture-board (the capture reading), then producing the bit-map data.

(8) With reference to "the environment setting file", processing the image data (the contraction/placement) based on the information such as "the division size" and "the printing location", etc., and then printing the processed image data on a seat.

Returning to Fig. 9 again, the description of the apparatus according to the present invention will continue.

As performing the seat printing at the step S8, it is confirmed whether or not there is a reprinting (step S9).

Now, the reprinting confirmation function in the system of the present invention will be described.

This reprinting confirmation function provides a user interface that confirms a necessitate/non-necessitate of the reprinting of the seal outputted. For a confirmation, the necessitate/non-necessitate is urged by a voice and a message display, and with an operation of the joystick a selection of "YES/NO" is made, and the necessitate/non-necessitate of the reprinting of the seal is finalized by depressing a decision button.

However, for the finalization, by providing the timer (for instance, 10 seconds timer) , and then, during that time period, the finalization of "YES/NO" and an insertion of the required number of coins must be completed. If the finalization of "YES/NO" and the insertion of the required number of coins are not completed, then it is automatically determined that "the reprinting is not necessary".

When performing the reprinting, it is configured that the capture read of the image data is not implemented, but the contents in the buffer within the printer is printed directly.

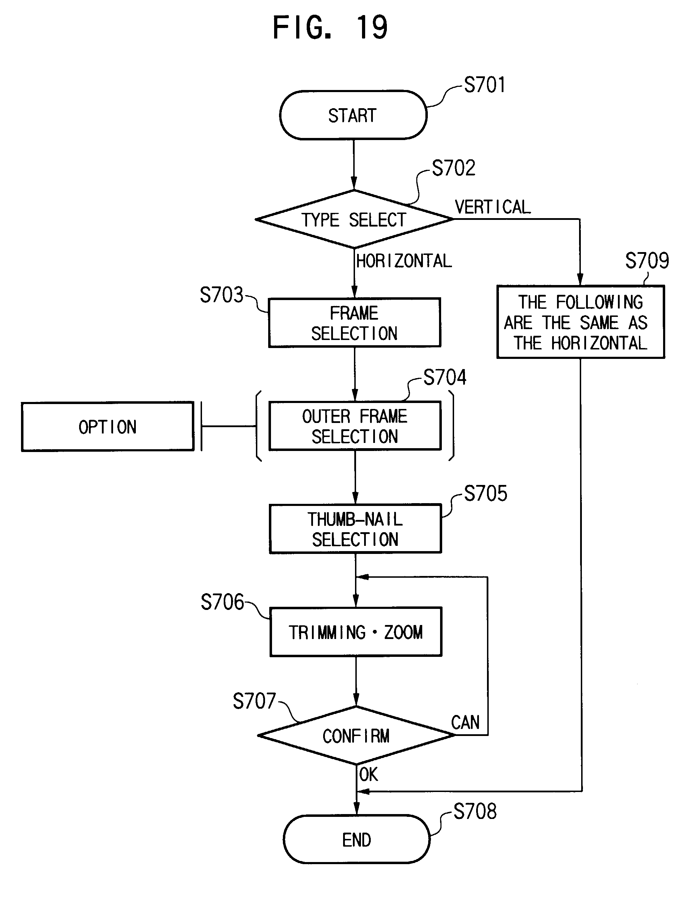

Fig. 19 is a flow diagram illustrating the operation of the digi-came mode (digital-camera mode) shown at step S7 in Fig. 9. That is, as described above, in case that there is a picture card at the step S5 in Fig. 9, the digital camera mode (hereinafter it is referred to as a digi-came mode) operation is implemented (step S7).

Next, referring to Fig. 19, the operation of the digi-came mode shown at the step S7 in Fig. 9 will be described.

If an operation of the digi-came mode is selected at the step S7 in Fig. 9 (step S701), although the mode selection is automatically determined to the single in this embodiment, but it may be configured that a mode select for performing a mode selection of either a single, a double, or a croma-key is to be displayed on the screen of CRT 30, as similar to the Pricla mode.

Herein, the single mode will be described in detail.

When the single mode is selected automatically, a screen of a type select that sets a print to either a vertical or a horizontal type is displayed on the screen of CRT 30 (step S702).

Similar to the Pricla mode, a vertical type selection is a type that the contents of seal are printed in an upright image, and a horizontal type selection is a type that the contents of seal are printed in an oblong image, respectively. The operations until finalizing the type selection are (a) shifting a cursor frame for use in selection by the left-and-right operations of the joystick, and then (b) depressing a decision button, thereby finalizing the type selection.

However, since the time limit (the timer) is provided for the type selection, it is configured that when it becomes a time-over, then at that moment, the type selection at which the high-light frame for use in selection is located is selected automatically. Here, it will be described a case of which the horizontal type (oblong type) is selected at the step S702.

Then, since a plurality of frames are displayed on the screen of the CRT 30, the user selects a favorite frame among the plurality of frames (step S703). However, when the user is not pleased with the selected frame or is changed her/his mind to other frame, it is possible to cancel the selected frame and then to repeat the same operations as returning to the step S703 again.

The frame selection function provides a user interface at a time of making a selection of a frame to be printed on a seal. The operations until finalizing the frame selection include the steps of:

(1) Making a selection among the group ("A", "B", C", or "NO FRAME");
1a) A cursor frame for use in selection is shifted by the up-and-down operations of the joystick. Matching with this movement, the group-ready frame display window is slide-wise displayed. When the cursor frame is located on "NO FRAME", the frame display window is slide-wise deleted.
lb) A group is selected by depressing a decision button, thereby the cursor frame for use in selection is shifted to the frame display window.

(2) Performing a selection of a frame;
2a) A cursor frame for use in selection is shifted by the up-down and left-right operations of the joystick.
2b) A frame is selected by depressing a decision button, thereby the frame confirmation screen is displayed. By depressing a cancel button at this moment, it returns to the group selection (1) again.

(3) Finalizing the frame selection;

The selected frame is displayed on the screen. Herein, the frame is finalized by depressing the decision button. At this moment, when depressing the cancel button, it returns to the frame selection (2) again.

However, since the time limit (the timer) is provided for the frame selection, it is configured that when it becomes a time-over, then at that moment, the frame at which the high-light frame for use in selection is located is selected automatically.

Then, an outer frame selection screen is displayed on the screen of CRT 30 as an option (step S704). If this option of the outer frame selection is selected, a multiple of outer frames are displayed, so that a user can select his/her favorite outer frame among them. On the other hand, if the option is not selected, it would proceed to the next step without specifying the outer frame.

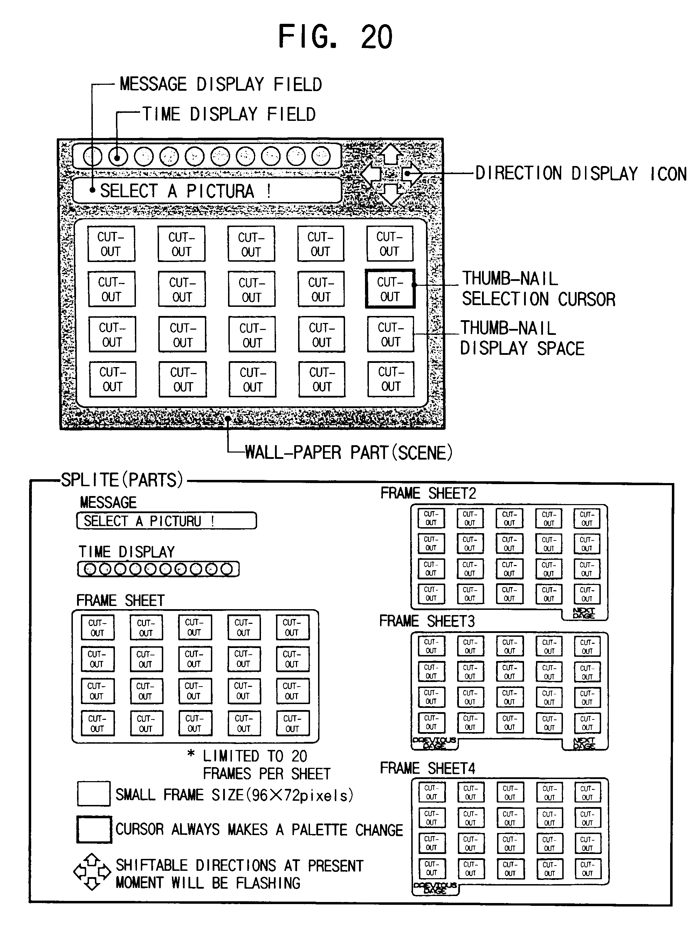

When having completed each of the steps described above, the thumb-nail select screen is displayed on the screen of CRT 30 as shown in Fig. 20 (step S705).

Now, referring to Figs. 20, 21 and 22, the thumb-nail selection screen will be described.

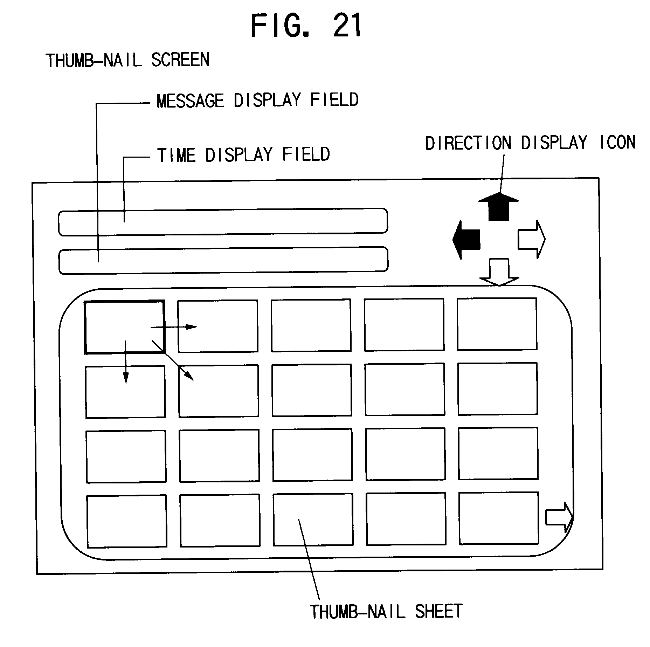

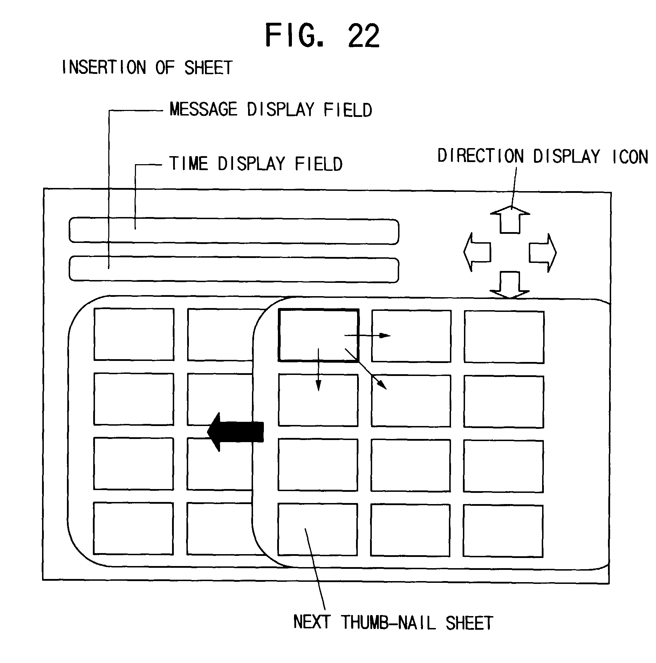

As shown in Figs. 21 and 22, on the thumb-nail sheet, the thumb-nail images of 96 × 72 pixels that are read from a compact flash (CF) are arranged in 5 columns × 4 rows. When there is an image of 20 or more frames, then as shown in Fig. 22, by shifting to the right with the joystick from the frame at the right-end, the next sheet is inserted. The sheet slides smoothly as similar to the frame category selection screen. In the present embodiment, the sheet is limited to the maximum 25 sheets, 500 frames, but it is not intended to limit to these numbers. These numbers depend on the resolution of the image and the capacity of the flash card. The margin of sheet of which the thumb-nail images do not reach to 20 sheets is filled with a white image, and a cursor is not shifted. It is used for the seal by taking the image at the cursor location at a time when depressing the decision button. Further, when the time of the timer is run out, it is assumed that an image on which a cursor is placed at that moment is used. In the present embodiment, herein, it is configured that the cancel button does not function, and also "the direction display icon" is such that only a direction to which it is movable is to be illuminated, but the system of the present invention is not intended to limit to this configuration.

Returning to Fig. 19 again, the explanation will be continued.

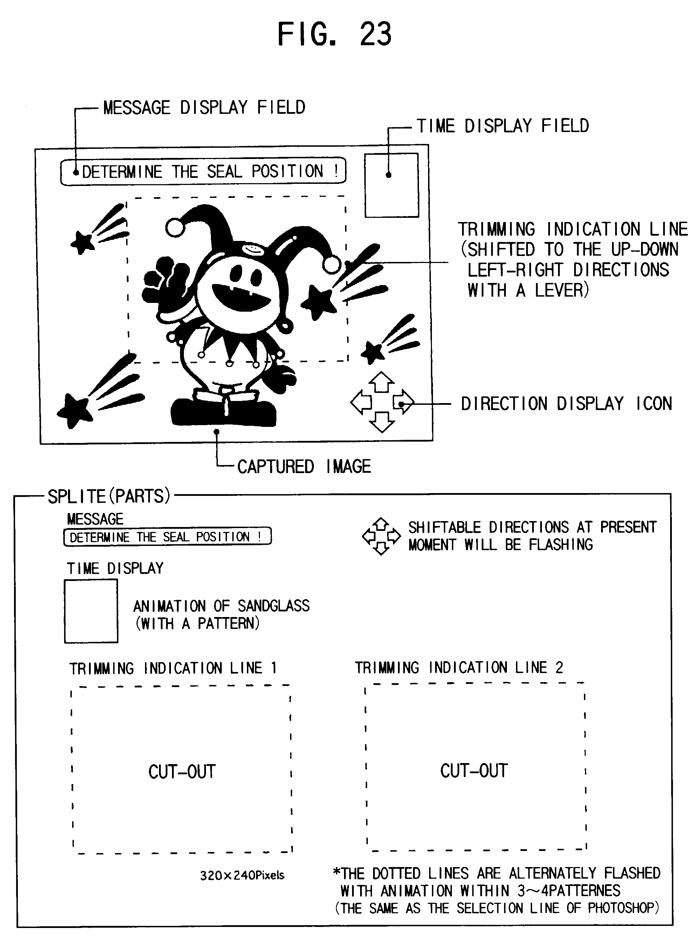

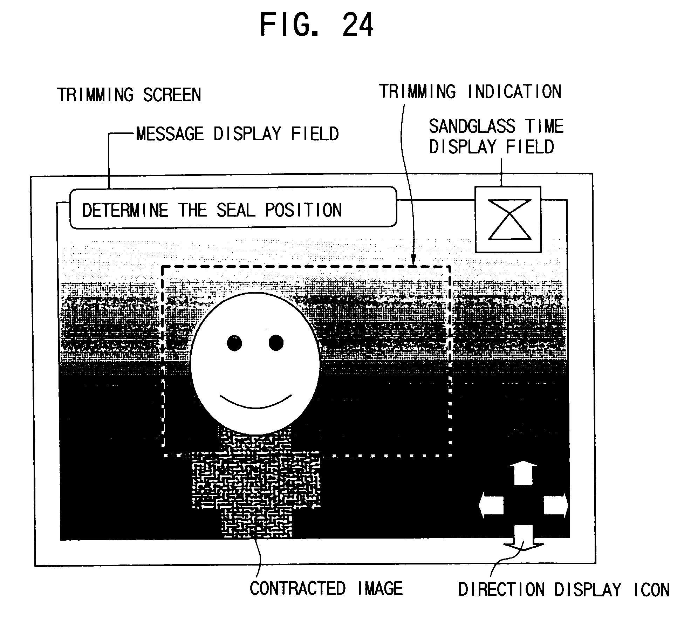

Then, performing a trimming-zoom process of the image(s) taken as described above (step S706). For this process, it will be described with reference to Figs. 23 and 24.

The trimming-zoom process is to display a high-resolution image (e.g., 1153 × 864 pixels) with a contraction (e.g., 576 × 432 pixels). It also displays the trimming line box of 320 × 240 pixels in superimposing with the image. The trimming line is configured as if the dotted line is moving in such a manner that two kinds of bit maps are alternately displayed. Further, the trimming line can be shifted in the up-down and the left-right directions with the joystick. It may be configured that by superimposing the frame determined in the above described frame selection as a semi-transparency image with the image taken as above, this semi-transparency image is shifted in the up-down and the left-right directions with the joystick.

A part of the trimmed image may also be zoomed-in/zoomed-out by shifting the joystick in the up-down directions.

Normally, a direction display icon indicates the up-down and the left-right shifts, but when it touches an edge, a direction into which it can not be shifted is made as a non-display.

By depressing the decision button the trimming location is determined, and then it shifts to an image composition screen. It is configured to return to the thumb-nail screen by depressing the cancel button.

Returning to Fig. 19 again, the description of the apparatus according to the present invention will continue.

After having performed the trimming-zoom process, a final confirmation of the image is implemented (step S707), and if necessary, the steps S706 through the above will be repeated. Then, if the image is finally confirmed, getting out from this loop (step S708).

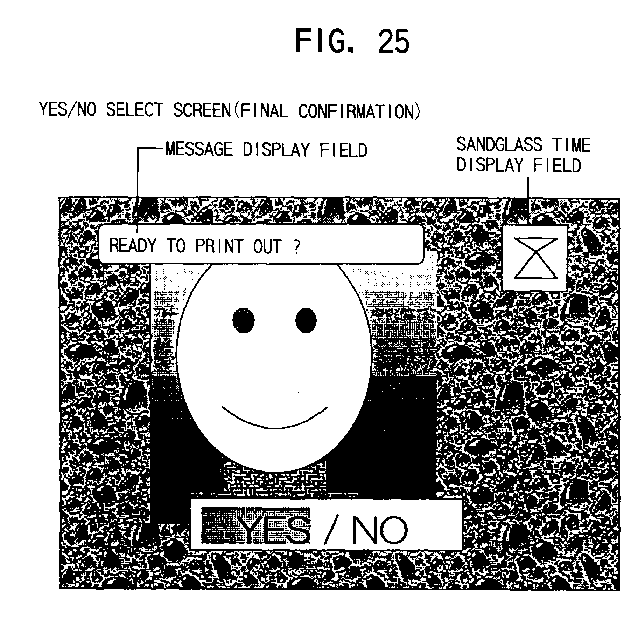

Now, referring to Fig. 25, the final confirmation will be described.

In the final confirmation, the area that was selected in the trimming screen is returned to the original resolution of 640 × 480 pixels and then is superimposed with the frame. A selection of the "YES/NO" is made with the joystick, and then the decision button is depressed. Herein, when the "YES" is selected, or when the timer is run out, then as shown in the step S8 in Fig. 9, the printing is started and the operations similar to the ones described above will be performed.

Further, when the "NO" is selected, then it returns to the thumb-nail screen.

In the present embodiment, it is configured that a screen design is a common with the one in the Precla mode. Further, in the present embodiment, at this step, it is assumed that no photograph shift is performed.

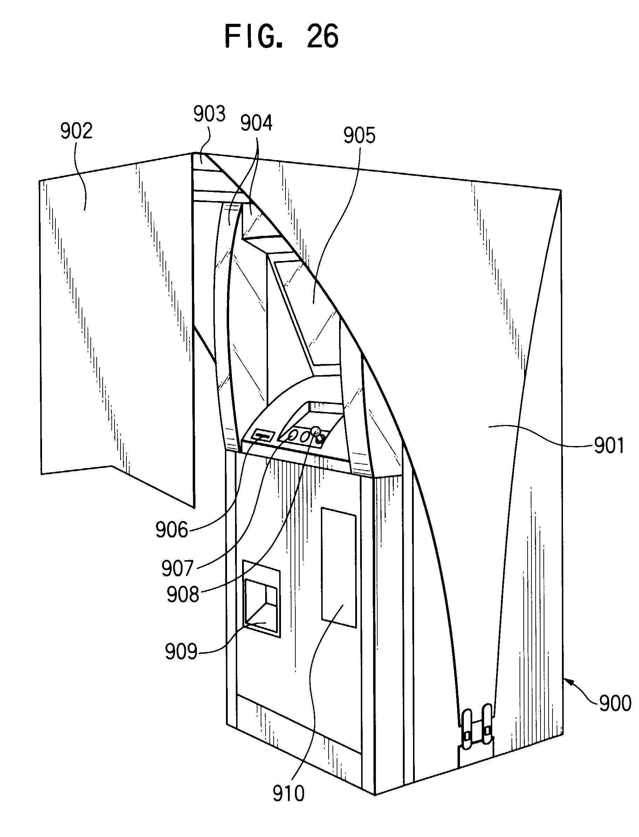

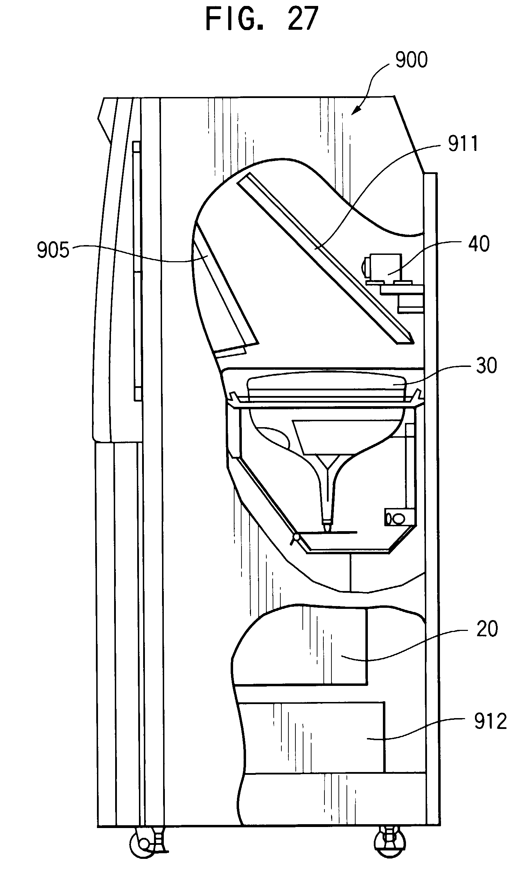

As an example of the actual apparatus for the present embodiment will be described briefly with reference to Figs. 26 and 27. The apparatus body (cabinet) 900 is an interactive-type apparatus for composing image data with an accounting function for a business use according to the present invention. The cover 901 is a cover made of vinyl for covering and protecting the cabinet 900, and also has an effect of blocking the light from the sides. The curtain 902 is a banner made of vinyl with a lining of a deep blue color, and is utilized as a scene for the croma-key photographing. The props 903 are installed so as to protrude from the upper part of the cabinet 900 to the front thereof, and hung the curtain 902 therefrom. The illuminations 904 are placed at three locations as the left-side and the right-side parts and the upper part of the cabinet 900, and only turn on at a time of taking a picture of an user. The screen 905 is a transparency window disposed in front of the cabinet 900, and the images from the inside of the cabinet 900 are projected thereon. The picture card adapter slot 906 is an insert slot for a picture card adapter that is used for the digi-came mode. In general, the user will bring a picture card such as the Kodak DC220 and the like with him/her, and borrow a picture card adapter to set, which is kept as an equipment in the shop at where the apparatus is installed, and then plug it into the picture card adapter slot 906. Two of the buttons 907 are installed at the front part of the cabinet 900, and one button is for use in the decision/printing, and the other button is for use in the cancellation. Only one joystick 908 is installed at the front part of the cabinet 900, and will operate in the four directions at a time of the selection. The outlet 909 is installed at a lower portion of the front part of the cabinet 900, and from the outlet 909 a user will take out the printed seal(s) that is produced. The cash box door 910 is an outlet for the cash box into which the inserted coins are stored. The half-mirror 911 is built- in the cabinet 900 and reflects the image of the CRT 30 and projects it toward the user. Further, the CCD camera 40 is installed behind the half-mirror 911, and it can take a picture of the user. The PC body 912 is a stand-still type personal computer and includes the PC block 10.

The invention may be embodied in other specific forms without departing from the spirit or essential characteristics thereof. The present embodiments are therefore to be considered I all respects as illustrative and not restrictive, the scope of the invention being indicated by the appended claims rather than by the foregoing description and all changes and modifications which come within the meaning and range of equivalency of the claims are therefore intended to be embraced therein.

## Claims

1. An apparatus for composing a plurality of image data interactively, comprising:
an image data reading means for reading an image data of a subject from a storage medium into which said image data is stored, said image data being picked up in advance by using any kind of an external image pickup means;
an image pickup means for picking up an image of a subject that is placed at a predetermined location with respect to said apparatus and for producing an image data of said subject;
a determining means for determining whether or not an image data of a subject to be composed is said image data that is read by said image data reading means;
an operation mode selecting means for selecting either a first operation mode that uses the image data read by said image data reading means or a second operation mode that uses the image data produced by said image pickup means, based on a determined result of said determining means;
an image composing means for composing the image data of said subject with an image data of other than said subject, based on an operation mode selected by said operation mode selecting means and for creating an composed image data; and
a composed image creating means for creating at least one composed image based on said composed image data created by said image composing means.

2. An apparatus according to claim 1, further comprises a printing means for printing on a predetermined seal said composed image created by said composed image creating means and for outputting said seal printed with said composed image.

3. An apparatus according to claim 1, wherein said image composing means further includes a composed image selection means which is capable of selecting to create said image data of said subject picked up by said image pickup means with a single-composed image, a double-composed image, or a croma-key processed image, when said operation mode selected by said operation mode selecting means is the second operation mode.

4. An apparatus according to claim 1, wherein said image composing means is capable of trimming said image data picked up in either said first operation mode or said second operation mode.

5. An apparatus according to claim 1, wherein said image data composing means is capable of zooming-in/zooming-out said image data picked up in either said first operation mode or said second operation mode before composing said image data of said subject with said image data of other than said subject.

6. An apparatus according to claim 1, wherein said image data of other than said subject includes at least a frame data and a message imaged data.

7. An apparatus according to claim 6, wherein said image data of other than said subject further includes an outer frame image data.

8. An apparatus according to claim 1, wherein said external image pickup means is a digital camera, and said storage medium is an IC card, and said image data reading means is a digital image data reader that reads an image data from said IC card into which the image data picked up by said digital camera is stored.

9. An apparatus according to claim 1, wherein said image pickup means is a CCD camera that is built-in said interactive-type apparatus and is capable of taking a picture of said subject by zooming-in/zooming-out.

10. A method of composing a plurality of image data interactively, comprising the steps of:
determining whether or not an image data of a subject to be composed is an image data that is picked up in advance;
composing the image data of said subject with an image data of other than said subject, if said image data of said subject to be composed is picked up in advance according to said determined result;
taking a picture of a subject that is placed at a predetermined location and creating an image data of said subject, and composing said image data of said subject with an image data of other than said subject, if said image data of said subject to be composed is not picked up in advance according to said determined result; and
creating at least one composed image based on said composed image data.

11. A method according to claim 10, further comprises the step of printing said composed image on a predetermined seal and outputting said seal printed with said composed image.

12. A method according to claim 10, further comprises the step of selecting to create said image data of said subject picked up with a single-composed image, a double-composed image, or a croma-key processed image, when said image data of said subject to be composed is not picked up in advance.

13. A method according to claim 10, further comprises the step of trimming said image data picked up in either said first operation mode or said second operation mode.

14. A method according to claim 10, further comprises the step of zooming-in/zooming-out said image data before composing said image data of said subject with said image data of other than said subject.

15. A method according to claim 10, wherein said image data of other than said subject includes at least a frame data and a message imaged data.

16. A method according to claim 15, wherein said image data of other than said subject further includes an outer frame image data.
